# EUROPEAN PATENT APPLICATION

(11) **EP 1 629 891 A2**
(43) Date of publication of application: **01.03.2006**
(21) Application number: 05254839.3
(22) Date of filing: 03.08.2005
(51) Int. Cl.: B01L 3/00, G01N 33/58, B01J 19/00

(54) **Testing plate and test method using the same**

(30) Priority: 23.08.2004 JP 2004241900
(71) Applicant: ALPS ELECTRIC CO., LTD., Ota-ku Tokyo 145 (JP)
(72) Inventor: Yamashita, Tatsumaro, c/o Alps Electric Co., Ltd., Tokyo (JP); Takamura, Shozo, c/o Alps Electric Co., Ltd., Tokyo (JP)
(74) Representative: Kensett, John Hinton

(57) **Abstract**

A testing plate includes a base body having a concave portion therein and a lid body. A space is formed by the concave portion and the lid body. Minute particles are arranged in the space, and plural types of position regulating units are arranged in the space. A plurality of position regulating portions are provided in the position regulating units, respectively, and the position regulating portions are arranged at regulation intervals which are respectively smaller than the diameters of the minute particles. The positions of the minute particles are respectively regulated by the position regulating units.

## Description

### BACKGROUND OF THE INVENTION

### 1. Field of the Invention

The present invention relates to a simple testing plate used for performing a blood test, a urine test, or a DNA test by a medical institution or an individual, and to a method of manufacturing the same, and more specifically, to a testing plate capable of easily arranging particles having probes fixed thereon according to the kind of the probe and to a method of manufacturing the testing plate in which the particles are arranged.

### 2. Description of the Related Art

Recently, a testing chip for a collected material from the human body, such as blood or urine, has been developed. For example, a DNA chip where multiple kinds of DNA fragments (probes) are attached on a substrate, such as glass, can measure expression of gene (test sample or target) collected from the human body at one time.

When a biochemical reaction, which has been conventionally performed by a test tube, a dropper, an agitator or the like, is performed on the testing chip, a test can be performed at high speed, and a test process can be simplified, which attracts attention.

In the meantime, a testing chip is mainly developed as a research chip for a university or a research institution at the moment, but it is expected in the future that a simple testing chip for a medical institution or an individual will be commercialized.

As such a testing chip, there is provided a so-called bead system where minute particles (immobilized particles) having multiple kinds of probes fixed thereon are arranged in a predetermined order. In the testing chip using the bead system, when the immobilized particles are brought into contact with a test sample, the probes and the test sample react to each other. By measuring which kind of probe reacts to the test sample or which kind of probe does not react to the test sample, an intended test can be performed.

For example, Japanese Unexamined Patent Application Publication No. 2000-346842 discloses a technical idea related to a testing chip using a bead system in which immobilized minute particles are arranged in a predetermined order.

In the technical idea disclosed in Japanese Unexamined Patent Application Publication No. 2000-346842, there is provided a testing chip in which immobilized minute particles are arranged in a predetermined order according to the kind of probe. However, since the probes are arranged according to the kind thereof, the number of arrangement operations significantly increases, which deteriorates the efficiency of manufacture.

In addition, in the technical idea disclosed in Japanese Unexamined Patent Application Publication No. 2000-346842, a plurality of immobilized minute particles on which the same kind of probes are fixed are injected into a cell having a sheet on which a supplementary hole is formed. Then, the plurality of immobilized minute particles are rocked, so that one of the immobilized minute particles is positioned inside the bead supplementary hole. Next, after the remaining immobilized minute particles are discharged, the bead supplementary hole is arrange opposite to a capillary axis formed on a capillary holding substrate, so that the immobilized minute particle positioned inside the bead supplementary hole is introduced into an arrangement capillary connected to the capillary axis. As such, in the technical idea disclosed in Japanese Unexamined Patent Application Publication No. 2000-346842, the number of arrangement processes of the immobilized minute particles significantly increases, which makes the arrangement operation complicated.

### SUMMARY OF THE INVENTION

The present invention has been finalized in view of the drawbacks inherent in the related art. An object of the present invention is to provide a testing plate capable of easily arranging minute particles having different probes fixed thereon in a predetermined order with fewer processes, a method of manufacturing the testing plate, and a test method using the testing plate.

According to an aspect of the invention, a testing plate includes a base body having a concave portion therein; a lid body; and position regulating units that are provided in a space surrounded by the concave portion and the lid body to regulate the positions of minute particles. In the testing plate, plural kinds of minute particles formed to have different particle diameters are stored in the space surrounded by the concave portion and the lid body, and each position regulating unit has position regulating portions which are arranged at predetermined regulation intervals, and the regulation interval is set to pass particles having a diameter smaller than that of the minute particles.

In the above-mentioned structure, it is preferable that plural types of position regulating units having different regulation intervals be formed in the space, and that the plural types of position regulating units be arranged such that one of the plural types of position regulating units positioned closest to an anterior edge of the testing plate has the largest regulation interval and such that another of the plural types of position regulating units positioned closest to a posterior edge of the testing plate is the smallest regulation interval, so that the regulating intervals are gradually decreased from the anterior edge to the posterior edge. In addition, preferably, the positions of the minute particles are regulated by the position regulating units such the minute particles having the same diameter are positioned in the same region.

Further, in the above-mentioned structure, it is preferable that the position regulating portions be composed of a plurality of projections extending from a bottom surface of the concave portion toward a top surface of the base body, and that the plurality of projections be formed at predetermined regulation intervals to constitute the position regulating units. In addition, preferably, each of the position regulating portions is composed of a contact portion formed on the bottom surface of the concave portion to come into contact with the minute particle and a contact portion formed on the lower surface of the lid body to come into contact with the minute particle, and both contact portions are formed at a regulation interval to constitute the position regulating unit.

According to another aspect of the invention, there is provided a testing method using the above-mentioned testing plate. The testing method includes mixing the minute particles with a test sample serving as a material to be tested; supplying the minute particles and the test sample into the position regulating units to flow from the position regulating unit formed closest to an anterior edge of the testing plate to the position regulating unit formed closest to an posterior edge of the testing plate, so that the positions of the minute particles are regulated by the position regulating units; and detecting a reaction state between the test sample and the minute particles whose positions are regulated by the respective position regulating units.

### BRIEF DESCRIPTION OF THE DRAWINGS

FIG. 1 is a perspective view illustrating the appearance of a testing plate according to a first embodiment of the invention;
FIG. 2 is a plan view of the testing plate shown in FIG. 1, as viewed from an upper side;
FIG. 3 is a cross-sectional view illustrating a state where the testing plate shown in FIG. 1 is cut along the line III-III to be seen from an X1 direction of FIG. 1;
FIG. 4 is a plan view of a base body of the testing plate shown in FIG. 1, as viewed from the upper side;
FIG. 5 is a cross-sectional view illustrating a state where the base body shown in FIG. 4 is cut along the line V-V to be seen from a Y1 direction of FIG. 4;
FIG. 6 is a schematic diagram illustrating a method of arranging minute particles in the testing plate shown in FIG. 1;
FIG. 7 is a schematic diagram illustrating the method of arranging the minute particles in the testing plate shown in FIG. 1;
FIG. 8 is a schematic diagram illustrating the method of arranging the minute particles in the testing plate shown in FIG. 1;
FIG. 9 is a schematic diagram illustrating the method of arranging the minute particles in the testing plate shown in FIG. 1;
FIG. 10 is a schematic diagram illustrating the method of arranging the minute particles in the testing plate shown in FIG. 1;
FIG. 11 is a plan view of a testing plate according to a second embodiment of the present invention, as viewed from the upper side;
FIG. 12 is a cross-sectional view illustrating a state where the testing plate shown in FIG. 11 is cut along the XII-XII to be seen from an X1 direction of FIG. 11; and
FIG. 13 is a plan view of a base body of the testing plate shown in FIG. 11, as viewed from the upper side.

### DESCRIPTION OF THE PREFERRED EMBODIMENT

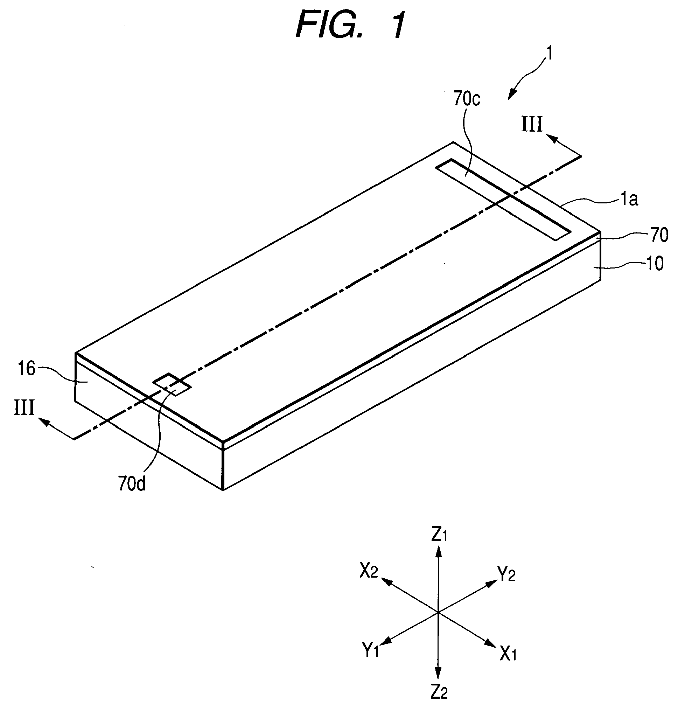

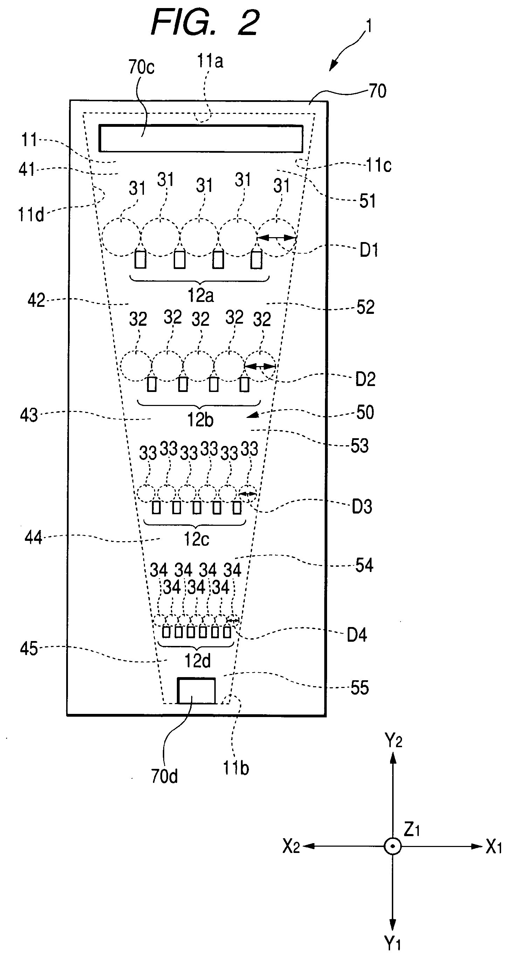

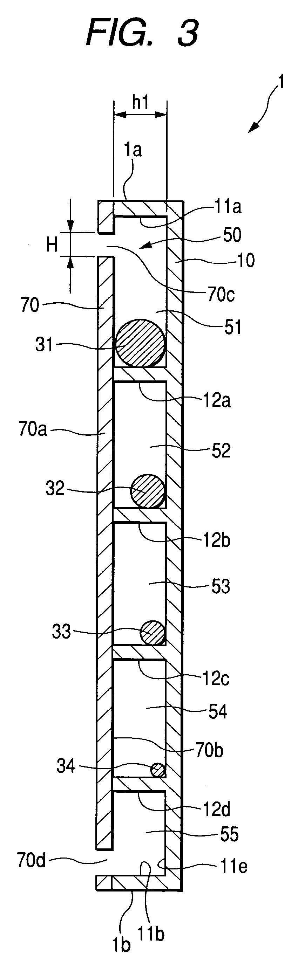

FIG. 1 is a perspective view illustrating the appearance of a testing plate according to a first embodiment of the invention. FIG. 2 is a plan view of the testing plate shown in FIG. 1, as viewed from an upper side (Z1 direction shown in FIG. 1), and FIG. 3 is a cross-sectional view illustrating a state where the testing plate shown in FIG. 1 is cut along the line III-III to be seen from an X1 direction of FIG. 1.

A testing plate 1 shown in FIG. 1 performs a predetermined test where a test sample, such as blood or urine, collected from the human body reacts to a predetermined reagent or the like. When the testing plate is used as, for example, a DNA chip, the collected test sample, such as blood, is subjected to a predetermined treatment, such as a fluorescent labeling treatment, to be used.

In the embodiment shown in FIG. 1, the testing plate 1 has a substantial-rectangular-parallelepiped shape which has a predetermined thickness to extend in the longitudinal direction (Y1-Y2 direction in FIG. 1) perpendicular to the width direction (X1―X2 direction in FIG. 2). Alternatively, it may have shapes other than the substantial-parallelepiped shape.

The testing plate 1 is constituted by a base body 10 and a lid body 70. The base body 10 and the lid body 70 are formed of, for example, glass or resin, and are also formed of a material having a predetermined fluorescent intensity. In particular, when the testing plate 1 is used as a DNA chip or a protein chip, it is preferable that the testing plate 1 be made of a material, such as silica glass, polydimethylsiloxane (PDMS), or polymethyl methacrylate (PMMA), which exhibits low fluorescence and high chemical resistance.

When the testing plate 1 is formed of resin, it is preferable that the testing plate 1 be formed by injection molding.

The base body 10 and the lid body 70 may not be formed of the same material. However, when the base body 10 and the lid body 70 are formed of the same material, there is an advantage in that the base body 10 and the lid body 70 are easily bonded to each other without an adhesive, for example.

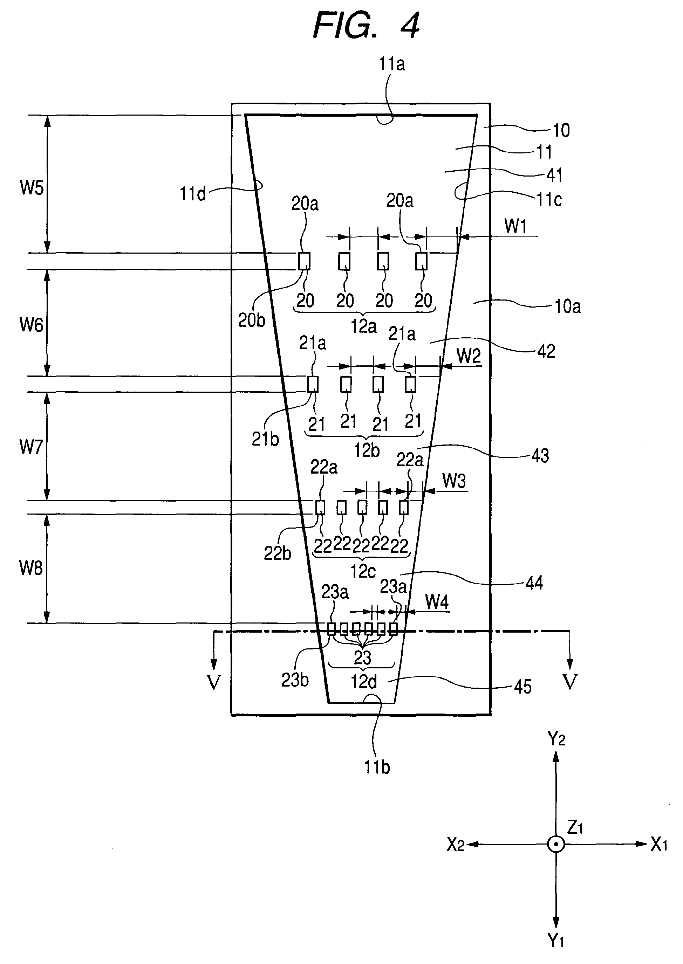

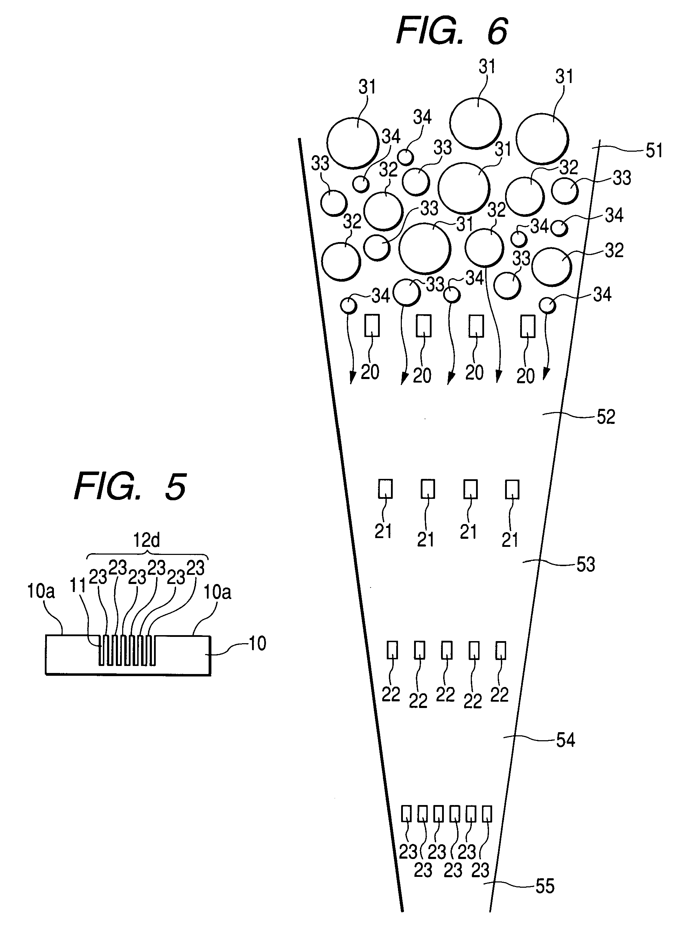

FIG. 4 is a plan view of the base 10 as viewed from an upper side (Z1 direction shown in FIG. 1), and FIG. 5 is a cross-sectional view illustrating a state where the base body 10 is cut along the line V-V shown in FIG. 4 to be seen from the Y1 direction shown in FIG. 4.

As shown in FIGS. 3 and 4, a concave portion 11 having a predetermined depth h1 is formed in a top surface 10a of the base body 10. In the embodiment shown in FIG. 1, the concave portion 11 is constituted so that the width between a right border 11c and a left border 11d (the width in the X1-X2 direction shown in FIG. 4) becomes gradually narrow, from an upper border 11a toward a lower border 11b of the concave portion 11, which means that the planar shape thereof is trapezoid. However, in the present invention, the planar shape of the concave portion 11 may be constituted so as to have another shape.

As shown in FIG. 3, in the embodiment shown in FIG. 1, the depth h1 of the concave portion 11 is formed to be the same throughout the concave portion 11 from the upper border 11a to the lower border 11b. Accordingly, a bottom surface 11e of the concave portion 11 is constituted as a horizontal plane with respect to the top surface 10a.

As shown in FIGS. 3 to 5, on the bottom surface 11e of the concave portion 11, a first sieve portion 12a, a second sieve portion 12b, a third sieve portion 12c, and a fourth sieve portion 12d are formed to extend toward the top surface 10a. The respective sieve portions 12a, 12b, 12c, and 12d constitute a position regulating unit of the present invention.

The first sieve portion 12a is composed of a plurality of convex portions 20 extending from the bottom surface 11e to the top surface 10a. As shown in FIG. 4, in the first sieve portion 12a, the plurality of convex portions 20 are constituted so as to be positioned at predetermined intervals W1. In addition, in the convex portions 20 formed on both ends in the width direction (the X1-X2 direction shown in FIG. 4), the interval from the convex portion 20 to the right border 11c of the concave portion 11 is also set to W1. Here, the interval from the convex portion 20 to the right border 11c means an interval from the convex portion 20 to the right border 11c in the same longitudinal position as that of an upper edge 20a of the convex portion 20 (the position in the Y1―Y2 direction shown in FIG. 4). Although not shown in the drawings, the interval from the convex portion 20 to the left border 11d of the concave portion 11 is also set to W1.

The second sieve portion 12b is composed of a plurality of convex portions 21 extending from the bottom surface 11e to the top surface 10a. In the second sieve portion 12b, the plurality of convex portions 21 are constituted so as to be positioned at predetermined intervals W2. Here, the interval from the rightmost convex portion 21 to the right border 11c means an interval from the convex portion 21 to the right border 11c in the same longitudinal position as that of an upper edge 21a of the convex portion 21 (the position in the Y1-Y2 direction shown in FIG. 4). Further, although not shown in the drawings, the interval from the leftmost convex portion 21 to the left border 11d of the concave portion 11 is also set to W2.

The third sieve portion 12c is composed of a plurality of convex portions 22 extending from the bottom surface 11e to the top surface 10a. In the third sieve portion 12c, the plurality of convex portions 22 are constituted so as to be positioned at predetermined intervals W3. Here, the interval from the rightmost convex portion 22 to the right border 11c means an interval from the convex portion 22 to the right border 11c in the same longitudinal position as that of an upper edge 22a of the convex portion 22 (the position in the Y1-Y2 direction shown in FIG. 4). Further, although not shown in the drawings, the interval from the leftmost convex portion 22 to the left border 11d of the concave portion 11 is also set to W3.

The third sieve portion 12d is composed of a plurality of convex portions 23 extending from the bottom surface 11e to the top surface 10a. In the fourth sieve portion 12d, the plurality of convex portions 23 are constituted so as to be positioned at predetermined intervals W4. Here, the interval from the rightmost convex portion 23 to the right border 11c means an interval from the convex portion 23 to the right border 11c in the same longitudinal position as that of an upper edge 23a of the convex portion 23 (the position in the Y1-Y2 direction shown in FIG. 4). Further, although not shown in the drawings, the interval from the leftmost convex portion 23 to the left border 11d of the concave portion 11 is also set to W4.

The convex portions 20, 21, 22, and 23 constitute a position regulating unit of the present invention.

When the testing plate 1 is formed of resin, the concave portion 11 and the convex portions 20, 21, 22, and 23 can be formed by injection molding. In addition, when the testing plate 1 is formed of glass, the concave portion 11 and the convex portions 20, 21, 22, and 23 can be formed by hot pressing.

In addition, the interval W1 is set to be larger than the intervals W2, W3, and W4, and the interval W2 is set to be larger than the intervals W3 and W4. In addition, the interval W3 is set to be larger than the interval W4. The intervals W1, W2, W3, and W4 are regulation intervals of the present invention.

In other words, the relationship between the interval W1, the interval W2, the interval W3, and the interval W4 is W1 > W2 > W3 > W4. That is, the interval W1 of the convex portion 20 of the first sieve portion 12a positioned at the closest side to an anterior edge 1a of the testing plate 1 is the largest, while the interval W4 of the convex portion 23 of the fourth sieve portion 12d positioned at the closest side to a posterior edge 1b of the testing plate 1 is the smallest. In addition, from the anterior edge 1a toward the posterior edge 1b, the respective sieve portions 12a, 12b, 12c, and 12d are arranged in the order where the intervals W1, W2, W3, and W4 become gradually narrow.

As shown in FIG. 4, the first sieve portion 12a is formed in the position where the upper edge 20a of the convex portion 20 is spaced from the upper border 11a of the bottom surface 11 at a predetermined interval W5.

In addition, the second sieve portion 12b is formed in the position where the upper edge 21a of the convex portion 21 is spaced from the lower edge 20b of the convex portion 20 constituting the first sieve portion 12a at a predetermined interval W6.

Further, the third sieve portion 12c is formed in the position where the upper edge 22a of the convex portion 22 is spaced from the lower edge 21b of the convex portion 21 constituting the second sieve portion 12b at a predetermined interval W7.

Furthermore, the fourth sieve portion 12d is formed in the position where the upper edge 23a of the convex portion 23 is spaced from the lower edge 22b of the convex portion 22 constituting the third sieve portion 12c at a predetermined interval W8.

It is preferable that the interval W5 be larger than a diameter D1 of a first minute particle 31 to be described below. In addition, it is preferable that the interval W6 be larger than a diameter D2 of a minute second minute particle 32 to be described below. Further, it is preferable that the interval W7 be larger than a diameter D3 of a third minute particle 33 to be described below. In addition, it is preferable that the interval W8 be larger than a diameter D4 of a fourth minute particle 34 to be described below.

As shown in FIGS. 1 to 3, the base body 10 is overlapped by the lid body 70 from the upward direction (the Z1 direction in FIG. 1). As shown in FIG. 3, a lower surface 70b of the lid body 70 opposite to a top surface 70a thereof is joined to the top surface 10a of the base body 10.

As shown in FIG. 3, a first region 41 is constituted by a region which is surrounded by the upper border 11a of the concave portion 11, the upper borders 20a of the convex portions 20 constituting the first sieve portion 12a, and the right and left borders 11c and 11d of the concave portion 11.

In addition, a second region 42 is constituted by a region which is surrounded by the lower edges 20b of the convex portions 20 constituting the first sieve portion 12a, the upper borders 21a of the convex portions 21 constituting the second sieve portion 12b, and the right and left borders 11c and 11d of the concave portion 11.

Further, a third region 43 is constituted by a region which is surrounded by the lower edges 21b of the convex portions 21 constituting the second sieve portion 12b, the upper borders 22a of the convex portions 22 constituting the third sieve portion 12c, and the right and left borders 11c and 11d of the concave portion 11.

In addition, a fourth region 44 is constituted by a region which is surrounded by the lower edges 22b of the convex portions 22 constituting the third sieve portion 12c, the upper borders 23a of the convex portions 23 constituting the fourth sieve portion 12d, and the right and left borders 11c and 11d of the concave portion 11.

Furthermore, a fifth region 45 is constituted by a region which is surrounded by the lower edges 23b of the convex portions 23 constituting the fourth sieve portion 12d, the lower border 11b of the concave portion 11, and the right and left borders 11c and 11d of the concave portion 11.

As shown in FIGS. 1 to 3, a first space 51 which is surrounded by the first region 41 and the lower surface 70b of the lid body 70 is formed in the testing plate 1. In addition, a second space 52 which is surrounded by the second region 42 and the lower surface 70b of the lid body 70 is formed. Further, a third space 53 which is surrounded by the third region 43 and the lower surface 70b of the lid body 70 is formed. In addition, a fourth space 54 which is surrounded by the fourth region 44 and the lower surface 70b of the lid body 70 is formed. Further, a fifth space 55 which is surrounded by the fifth region 45 and the lower surface 70b of the lid body 70 is formed.

As shown in FIGS. 2 and 3, a space 50 is formed by the region which is surrounded by the first space 51, the second space 52, the third space 53, and the fourth space 54, that is, by the concave portion 11 and the lid body 70.

As shown in FIGS. 1 to 3, the lid body 70 is formed with holes 70c and 70d passing through the top surface 70a to the lower surface 70b.

The hole 70c is formed at a position opposite to the first region 41, and the first space 51 communicates with the outside of the testing plate 1 through the hole 70c.

The length H of the hole 70c in the longitudinal direction (the Y1―Y2 direction shown in FIG. 1) is larger than the diameters D1, D2, D3, and D4 of the first to fourth minute particles 31, 32, 33 and 34, which will be described below.

The hole 70d is formed at a position opposite to the fifth region 45, and the fifth space 55 communicates with the outside of the testing plate 1 through the hole 70d.

As shown in FIGS. 2 and 3, the testing plate 1 is provided so that a plurality of first minute particles 31 are positioned inside the first space 51, a plurality of second minute particles 32 are positioned inside the second space 52, a plurality of third minute particles 33 are positioned inside the third space 53, and a plurality of fourth minute particles 34 are positioned inside the fourth space 54.

In the embodiment shown in FIGS. 2 and 3, there are provided the plurality of first minute particles 31, the plurality of second minute particles 32, the plurality of third minute particles 33, and the plurality of fourth minute particles 34, respectively. However, in the present invention, the number of these particles 31, 32, 33, and 34 is not limited, but may be arbitrary. In addition, in the embodiment shown in FIGS. 2 and 3, there are provided four kinds of minute particles 31, 32, 33, and 34. However, in the present invention, three or less kinds of minute particles or five or more kinds of minute particles may be provided, without being limited thereto. In addition, the number of regions can be changed arbitrarily in accordance with the number of minute particles.

The first minute particle 31, the second minute particle 32, the third minute particle 33, and the fourth minute particle 34 are made of, for example, glass or fiber. In the embodiment shown in FIGS. 2 and 3, the first minute particle 31, the second minute particle 32, the third minute particle 33, and the fourth minute particle 34 are formed in spherical shapes, respectively. However, in the present invention, the first minute particle 31, the second minute particle 32, the third minute particle 33, and the fourth minute particle 34 may be formed in other shapes, but it is preferable that they be formed in spherical shapes so as to properly exhibit effects to be described below.

As shown in FIG. 2, the first minute particle 31 is formed to have the diameter D1. In addition, the second minute particle 32 is formed to have the diameter D2, the third minute particle 33 is formed to have the diameter D3, and the fourth minute particle 34 is formed to have the diameter D4.

The diameter D1 of the first minute particle 31 is larger than the diameter D2 of the second minute particle 32, the diameter D3 of the third minute particle 33, and the diameter D4 of the fourth minute particle 34.

In addition, the diameter D2 of the second minute particle 32 is larger than the diameter D3 of the third minute particle 33 and the diameter D4 of the fourth minute particle 34.

Further, the diameter D3 of the third minute particle 33 is larger than the diameter D4 of the fourth minute particle 34.

That is, the relationship between the diameter D1 of the first minute particle 31, the diameter D2 of the second minute particle 32, the diameter D3 of the third minute particle 33, and the diameter D4 of the fourth minute particle 34 is D1 > D2 > D3 > D4.

In addition, the diameter D1 of the first minute particle 31 is larger than the interval W1.

Furthermore, the diameter D2 of the second minute particle 32 is smaller than the interval W1, but is larger than the interval W2.

In addition, the diameter D3 of the third minute particle 33 is smaller than the intervals W1 and W2, but is larger than the interval W3.

Further, the diameter D4 of the fourth minute particle 34 is smaller than the intervals W1, W2, and W3, but is larger than the interval W4.

The same probes (DNA fragments) are fixed on the plurality of first minute particles 31, respectively. In addition, the same probes are fixed on the plurality of second minute particles 32, respectively. The same probes are fixed on the plurality of third minute particles 33, respectively. The same probes are fixed on the plurality of fourth minute particles 34, respectively.

In addition, different types of probes are fixed on the first minute particles 31, the second minute particles 32, the third minute particles 33, and the fourth minute particles 34. Further, in the respective minute particles 31, 32, 33, and 34, different kinds of fluorescent dyes are combined in the same proportion, or the same kind of fluorescent dyes or different kinds of fluorescent dyes are combined in different proportions. Since the kinds of the fluorescent dyes are different from each other and the combination proportions are different from each other, it can be identified what probes are fixed on a certain particle.

A method of arranging the respective minute particles 31, 32, 33, and 34 in the testing plate 1 of the present invention will be described with reference to FIGS. 6 to 10. In order to make it easy to understand the descriptions, FIG. 6 shows only the concave portion 11 of the testing plate 1, the convex portions 20, 21, 22, and 23 constituting the respective sieve portions 12a, 12b, 12c, and 12d, and the respective minute particles 31, 32, 33, and 34. Further, the lid body 70 is omitted from FIG. 6, but the lid body 70 is provided in the actual structure.

First, the first minute particles 31, the second minute particles 32, the third minute particles 33, and the fourth minute particles 34 are supplied into the first space 51 through the hole 70c. At this time, the posterior edge 1b of the testing plate 1 faces downward (the Y1 direction shown in FIG. 1), and the anterior edge 1a thereof faces upward (the Y2 direction shown in FIG. 1), so that the testing plate 1 is vertically placed. Moreover, the testing plate 1 may be vertically placed before the respective minute particles 31, 32, 33, and 34 are supplied into the first space 51 or after they are supplied. FIG. 6 is a diagram showing a state where the respective minute particles 31, 32, 33, and 34 are supplied into the first space 51.

Since the testing plate 1 is vertically placed, the respective minute particles 31, 32, 33, and 34 supplied into the first space 51 move toward the hole 70d, i.e., toward the second space 52 due to their own weight so as to flow toward the first sieve portion 12a.

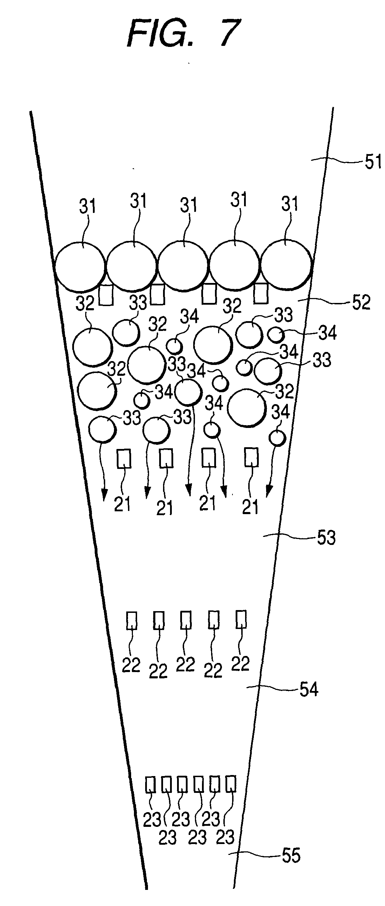

As described above, the diameter D1 of the first minute particle 31 is larger than the interval W1 between the respective convex portions 20 and the interval W1 between the right border 11c or the left border 11d of the concave portion 11 and the convex portion 20, respectively. Therefore, the first minute particles 31 are hindered from falling by the convex portions 20 so as to remain inside the first space 51, and thus the position of the first minute particle 31 is regulated inside the first space 51. On the other hand, since the respective diameters D2, D3, and D4 of the second minute particle 32, the third minute particle 33, and the fourth minute particle 34 are smaller than the interval W1, as shown by arrows in FIG. 6, the second minute particles 32, the third minute particles 33, and the fourth minute particles 34 pass between the respective convex portions 20 and between the right border 11c or the left border 11d of the concave portion 11 and the convex portion 20 so as to move toward the second space 52. Therefore, the first minute particles 31 are sieved by the first sieve portion 12a composed of the convex portions 20. FIG. 7 shows the state at this time.

Next, in the state shown in FIG. 7, the respective minute particles 32, 33, and 34 positioned inside the second space 52 continuously move toward the third space 53 due to their own weight so as to flow toward the second sieve portion 12b because the testing plate 1 is vertically placed.

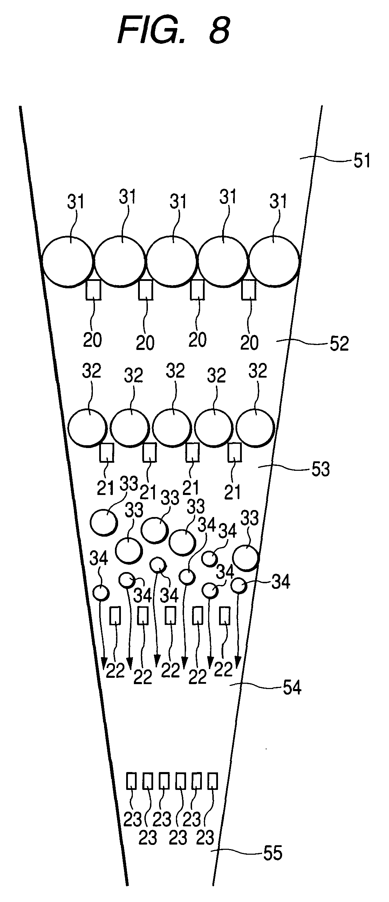

As described above, since the diameter D2 of the second minute particle 32 is larger than the intervals W2 between the respective convex portions 21 and the interval W2 between the right border 11c or the left border 11d of the concave portion 11 and the convex portion 21, the second minute particles 32 are hindered from falling by the convex portions 21 so as to remain inside the second space 52, and thus the position of the second minute particle 32 is regulated inside the second space 52. Accordingly, the second minute particles 32 are sieved by the second sieve portion 12b composed of the convex portions 21. On the other hand, since the diameters D3 and D4 of the third minute particle 33 and the fourth minute particle 34 are smaller than the interval W2, respectively, as shown by arrows in FIG. 7, the third minute particles 33 and the fourth minute particles 34 pass between the respective convex portions 21 and between the right border 11c or the left border 11d of the concave portion 11 and the convex portion 21, so as to move toward the third space 53. FIG. 8 shows the state at this time.

Next, as shown in FIG. 8, the respective minute particles 33 and 34 positioned inside the third space 53 continuously move toward the fourth space 54 due to their own weight so as to flow toward the third sieve portion 12c, because the testing plate 1 is vertically placed.

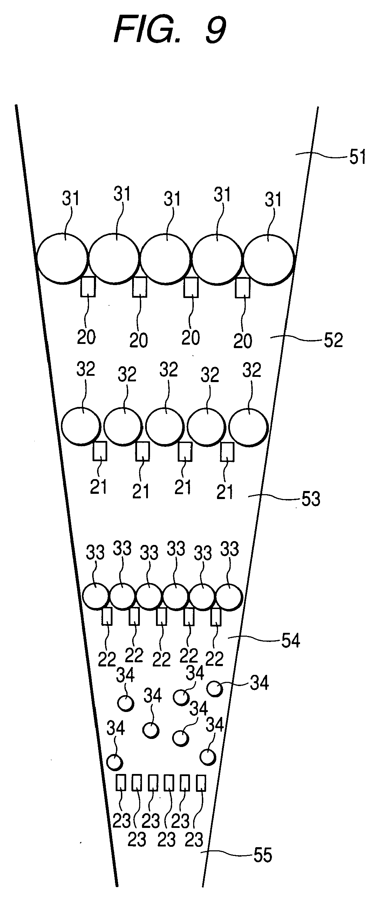

As described above, since the diameter D3 of the third minute particle 33 is larger than the interval W3 between the respective convex portions 22 and the interval W3 between the right border 11c or the left border 11d of the concave portion 11 and the convex portion 22, the third minute particles 33 are hindered from falling by the convex portions 22 so as to remain inside the third space 53, and thus the position of the third minute particle 33 is regulated inside the third space 53. Accordingly, the third minute particles 33 are sieved by the third sieve portion 12c composed of the convex portions 22. On the other hand, since the diameter D4 of the fourth minute particle 34 is smaller than the interval W3, as shown by arrows in FIG. 8, the fourth minute particles 34 pass between the convex portions 22 or between the right border 11c or the left border 11d of the concave portion 11 and the convex portion 22 so as to move toward the fourth space 54. FIG. 9 shows the state at this time.

In the state shown in FIG. 9, the fourth minute particles 34 positioned inside the fourth space 54 continuously move toward the fifth space 55 due to their own weight so as to flow toward the fourth sieve portion 12d, because the testing plate 1 is vertically placed.

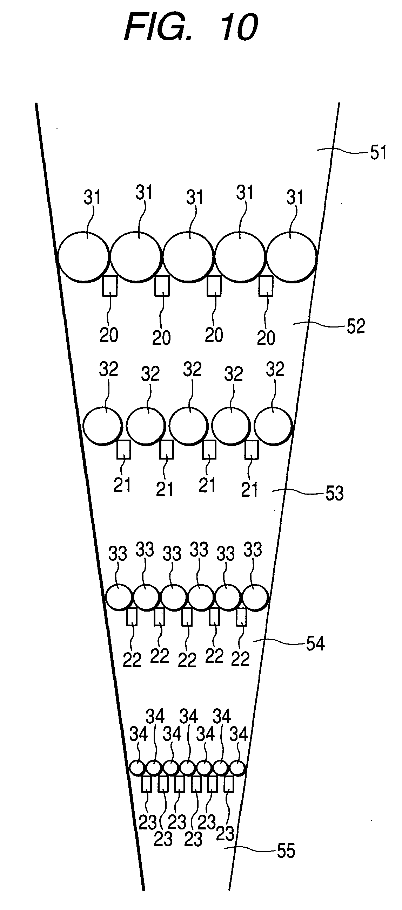

As described above, since the diameter D4 of the fourth minute particle 34 is larger than the interval W4 between the respective convex portions 23 and the interval W4 between the right border 11c or the left border 11d of the concave portion 11 and the convex portion 23, the fourth minute particles 34 are hindered from falling by the convex portions 23 so as to remain inside the fourth space 54, and thus the position of the fourth minute particle 34 is regulated inside the fourth space 54. Therefore, the fourth minute particles 34 are sieved by the fourth sieve portion 12d composed of the convex portions 23. FIG. 10 shows the state at this time.

If the respective minute particles 31, 32, 33, and 34 are supplied into the first space 51 together with a carrier substance composed of liquid or gas, the respective minute particles 31, 32, 33, and 34 can properly and easily move from the first space 51 toward the fifth space 55. At this time, the carrier substance composed of liquid or gas is discharged through the hole 70d.

Moreover, when the respective minute particles 31, 32, 33, and 34 are not supplied into the first space 51 together with the carrier substance, the respective minute particles 31, 32, 33, and 34 can move even though the hole 70d is not provided. However, if there is provided the hole 70d, the hole 70d functions as an air extractor, so that the respective minute particles 31, 32, 33, and 34 can further easily move.

In the testing plate 1 of the present invention, if the respective minute particles 31, 32, 33, and 34 are supplied through the hole 70c into the first space 51, they are sieved by the respective sieve portions 12a, 12b, 12c, and 12d. Therefore, the respective minute particles 31, 32, 33, and 34 can be easily and reliably arranged at predetermined positions (order) of the testing plate 1. Accordingly, when the respective minute particles 31, 32, 33, and 34 are arranged inside the testing plate 1, they do not need to be separately inserted into the testing plate 1, so that the arrangement of the respective minute particles 31, 32, 33, and 34 can be more easily performed.

In a state where the respective minute particles 31, 32, 33, and 34 are respectively arranged in the first space 51, the second space 52, the third space 53, and the fourth space 54, a test sample is injected through the hole 70c into the first space 51. As described above, the test sample is subjected to the fluorescent labeling treatment.

When the test sample is injected through the hole 70c into the first space 51, the posterior edge 1b of the testing plate 1 is positioned to face downward (the Y1 direction shown in FIG. 1), and the anterior edge 1a is positioned to face upward (the Y2 direction shown in FIG. 1), so that the testing plate is vertically placed. Moreover, the testing plate 1 may be vertically placed before the test sample is supplied into the first space 51 or after it is supplied.

Since the testing plate 1 is vertically placed, the test sample injected inside the first space 51 flows into the second space 52, and then flows into the third space 53 and the fourth space 54. At this time, the test sample sequentially comes in contact with the first minute particles 31 arranged in the first space 51, the second minute particles 32 arranged in the second space 52, the third minute particles 33 arranged in the third space 53, and the fourth minute particles 34 arranged in the fourth space 54 so as to be hybridized (binding reaction) with the probes fixed on the respective minute particles 31, 32, 33, and 34. At this time, specific components, such as DNA, included in the test sample are selectively bonded to the probes fixed on the respective minute particles 31, 32, 33, and 34. By measuring the fluorescence intensity labeled on the test sample, it is checked which probes of the minute particles 31, 32, 33, and 34 are bound to the test sample, which makes it possible to test a specific component of the test sample. By measuring the fluorescence intensity based on a difference in the kinds of fluorescence dyes or combination proportions of the respective minute particles 31, 32, 33, and 34, the probes of the respective minute particles 31, 32, 33, and 34 are identified.

Here, as the carrier substance, the test sample serving as a material to be tested can be supplied together with the respective minute particles 31, 32, 33, and 34 through the hole 70c into the first space 51. At this time, after the test sample is mixed outside the testing plate 1 (for example, inside another container), a mixed material of the test sample, the first minute particles 31, the second minute particles 32, the third minute particles 33, and the fourth minute particles 34 may be supplied into the first space 51. Alternatively, after the first minute particles 31, the second minute particles 32, the third minute particles 33, and the fourth minute particles 34 are supplied through the hole 70c into the first space 51, the test sample may be supplied through the hole 70c into the first space 51. In this case, the test sample and the respective minute particles 31, 32, 33, and 34 are brought into contact with each other to be hybridized inside the first space 51.

As such, if the carrier substance is composed of the test sample, the arrangement of the respective minute particles 31, 32, 33, and 34 and the hybridization between the probes and the test sample can be performed in the same process, which makes it possible to rapidly perform the test.

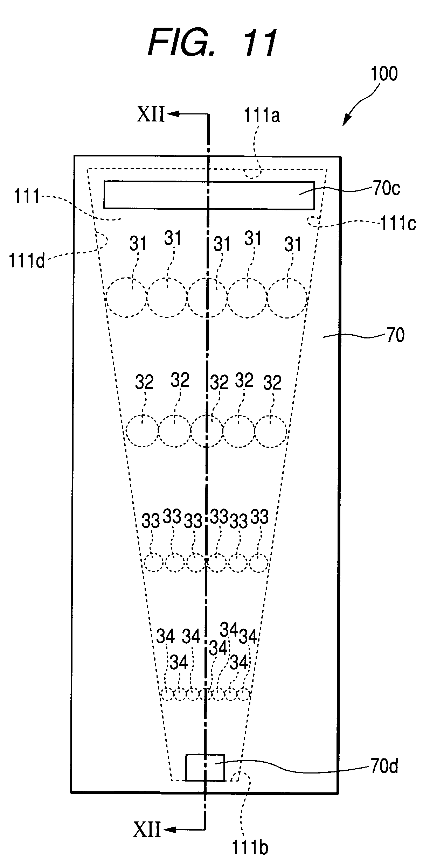

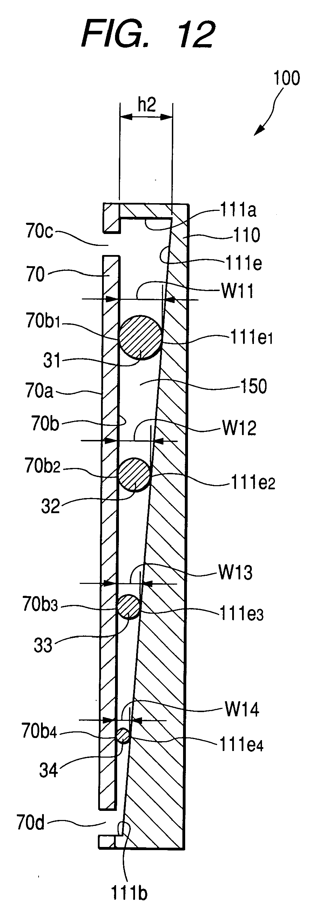

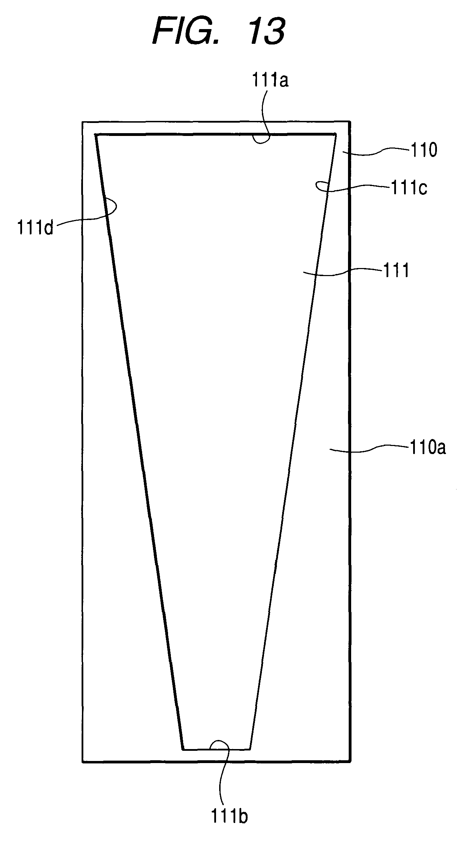

FIG. 11 is a plan view of a testing plate according to the second embodiment of the present invention as viewed from an upper side (the Z1 direction shown in FIG. 11), and corresponds to FIG. 2. FIG. 12 is a cross-sectional view showing a state where the testing plate shown in FIG. 11 is cut along the line XII-XII to be seen from the X1 direction of FIG. 1. FIG. 13 is a plan view of a base body of a testing plate 100 shown in FIG. 11, as viewed from the upper side.

The testing plate 100 shown in FIGS. 11 and 12 has the same components as those of the testing plate 1 shown in FIGS. 1 to 3. Therefore, in the testing plate 100, the same numerals are attached to the same components as those of the testing plate 1 shown in FIGS. 1 to 3, and a description thereof will be omitted.

The difference between the testing plate 100 and the testing plate 1 shown in FIGS. 1 to 3 is a basic structure. As shown in FIG. 13, a concave portion 111 having a predetermined depth h2 is formed in a top surface 110a of a base body 110 of the testing plate 100, similarly to the base body 10 of the testing plate 1 shown in FIGS. 1 to 3. In the embodiment shown in FIG. 13, the width (the width in the X1-X2 direction shown in FIG. 13) between a right border 111c and a left border 111d of the concave portion 111 is gradually decreased, from an upper border 111a toward a lower border 111b of the concave portion 111, which means that the planar shape thereof is trapezoid. However, in the present invention, the concave portion 111 may have another plan-view shape.

As shown in FIG. 13, the base body 110 is different from that of the testing plate 1 in that no projection is provided on the bottom surface 111e of the concave portion 111. As shown in FIG. 12, a depth h2 of the concave portion 111 becomes gradually narrow from the upper border 111a to the lower border 111b, which means that the bottom surface 111e of the concave portion 111 is formed as an inclined surface.

In the testing plate 100, the lid body 70 is joined to the top surface 110a of the base body 110. As shown in FIGS. 12 and 13, a region surrounded by the concave portion 111 and the lid body 70 forms a space 150.

In the space 150, the bottom surface 111e of the concave portion 111 is formed as an inclined surface. Therefore, an interval from the bottom surface 111e of the concave portion 111 to the lower surface 70b of the lid body 70 also becomes gradually narrow from an anterior edge 100a to a posterior edge 100b of the testing plate 100.

In the space 150, the surfaces of the first minute particles 31 come into contact with the bottom surface 111e and the lower surface 70b constituting the space 150, and the first minute particles 31 are arranged so as not to move downward. An interval W11 between a contact portion 111e1 where the first minute particle 31 comes into contact with the bottom surface 111e and a contact portion 70b1 where the first minute particle 31 comes into contact with the lower surface 70b is equal to the diameter D1 of the first minute particle 31.

Inside the space 150, the surfaces of the second minute particles 32 come into contact with the bottom surface 111e and the lower surface 70b constituting the space 150, and the second minute particles 32 are arranged so as not to move downward. An interval W12 between a contact portion 111e2 where the second minute particle 32 comes into contact with the bottom surface 111e and a contact portion 70b2 where the second minute particle 32 comes into contact with the lower surface 70b is equal to the diameter D2 of the second minute particle 32.

Inside the space 150, the surfaces of the third minute particles 33 come into contact with the bottom surface 111e and the lower surface 70b constituting the space 150, and the third minute particles 33 are arranged so as not to move downward. An interval W13 between a contact portion 111e3 where the third minute particle 33 comes into contact with the bottom surface 111e and a contact portion 70b3 where the third minute particle 33 comes into contact with the lower surface 70b is equal to the diameter D3 of the third minute particle 33.

Inside the space 150, the surfaces of the fourth minute particles 34 come into contact with the bottom surface 111e and the lower surface 70b constituting the space 150, and the fourth minute particles 34 are arranged so as not to move downward. An interval W14 between a contact portion 111e4 where the fourth minute particle 34 comes into contact with the bottom surface 111e and a contact portion 70b4 where the fourth minute particle 34 comes into contact with the lower surface 70b is equal to the diameter D4 of the fourth minute particle 34.

The contact portion 111e1 and the contact portion 70b1 are position regulating portions of the present invention, and both the contact portion 111e1 and the contact portion 70b1 constitute a position regulating unit of the present invention. In addition, the contact portion 111e2 and the contact portion 70b2 are position regulating portions of the present invention, and both the contact portion 111e2 and the contact portion 70b2 constitute a position regulating unit of the present invention. Further, the contact portion 111e3 and the contact portion 70b3 are position regulating portions of the present invention, and both the contact portion 111e3 and the contact portion 70b3 constitute a position regulating unit of the present invention. In addition, the contact portion 111e4 and the contact portion 70b4 are position regulating portions of the present invention, and both the contact portion 111e4 and the contact portion 70b4 constitute a position regulating unit of the present invention.

Here, the interval W11 is larger than the intervals W12, W13, and W14. The interval W12 is larger than the intervals W13 and W14. The interval W13 is larger than the interval W14.

In other words, the relationship between the intervals W11, W12, W13, and W14 is W11 > W12 > W13 > W14. That is, the interval W11 positioned closest to an anterior edge 100a of the testing plate 100 is the largest, while the interval W14 positioned closest to a posterior edge 100b of the testing plate 100 is the smallest. In addition, the intervals W11, W12, W13, and W14 become gradually narrow in this order, from the anterior edge 100a toward the posterior edge 100b.

In addition, the diameter D1 of the first minute particle 31 is larger than the intervals W12, W13, and W14.

In addition, the diameter D2 of the second minute particle 32 is smaller than the interval W11, but is larger than the intervals W13 and W14.

Further, the diameter D3 of the third minute particle 33 is smaller than the intervals W11 and W12, but is larger than the interval W14.

In addition, the diameter D4 of the fourth minute particle 34 is smaller than the intervals W11, W12, and W13.

Accordingly, when the first minute particles 31, the second minute particles 32, the third minute particles 33, and the fourth minute particles 34 are supplied through the hole 70 into the space 150, the posterior edge 100b of the testing plate 100 is positioned to face downward (the Y1 direction shown in FIG. 11), and the anterior edge 100a of the testing plate 100 is positioned to face upward (the Y2 direction shown in FIG. 11), so that the testing plate 100 is vertically placed. In this case, the respective minute particles 31, 32, 33, and 34 supplied into the space 150 move toward the hole 70d due to their own weight, because the testing plate 100 is vertically placed.

As described above, in the testing plate 100, the interval W11 between the contact portion 111e1 and the contact portion 70b1 is equal to the diameter D1 of the first minute particle 31. In addition, the interval W12 between the contact portion 111e2 and the contact portion 70b2 is equal to the diameter D2 of the second minute particle 32. Further, the interval W13 between the contact portion 111e3 and the contact portion 70b3 is equal to the diameter D3 of the third minute particle 33. In addition, the interval W14 between the contact portion 111e4 and the contact portion 70b4 is equal to the diameter D4 of the fourth minute particle 34.

Accordingly, the first minute particles 31 come into contact with the contact portion 111e1 and the contact portion 70b1, so that the first minute particle 31 are arranged in the space 150 so as to be interposed between the contact portion 111e1 and the contact portion 70b1.

In addition, since the diameter D2 of the second minute particle 32 is smaller than the interval W11, the second minute particles 32 pass through the contact portion 111e1 and the contact portion 70b1 and then come into contact with the contact portion 111e2 and the contact portion 70b2. Therefore, the second minute particles 32 are arranged in the space 150 so as to be interposed between the contact portion 111e2 and the contact portion 70b2.

Furthermore, since the diameter D3 of the third minute particle 33 is smaller than the intervals W11 and W12, the third minute particles 33 pass through the contact portions 111e1 and 111e2 and the contact portions 70b1 and 70b2 and then come into contact with the contact portion 111e3 and the contact portion 70b3. Therefore, the third minute particles 33 are arranged in the space 150 so as to be interposed between the contact portion 111e3 and the contact portion 70b3.

In addition, since the diameter D4 of the fourth minute particle 34 is smaller than the intervals W11, W12 and W13, the fourth minute particles 34 pass through the contact portions 111e1, 111e2, and 111e3 and the contact portions 70b1, 70b2, and 70b3 and then come into contact with the contact portion 111e4 and the contact portion 70b4. Therefore, the fourth minute particles 34 are arranged in the space 150 so as to be interposed between the contact portion 111e4 and the contact portion 70b4.

FIGS. 11 and 12 show the state at this time.

Accordingly, in the testing plate 100, if the respective minute particles 31, 32, 33, and 34 are supplied through the hole 70c into the space 150, the positions of the respective minute particles 31, 32, 33, and 34 can be regulated by the respective contact portions 111e1, 111e2, 111e3, and 111e4 and the respective contact portions 70b1, 70b2, 70b3, and 70b4. Therefore, the respective minute particles 31, 32, 33, and 34 can be easily and reliably arranged at predetermined positions (order) in the testing plate 100. Accordingly, when the respective minute particles 31, 32, 33, and 34 are arranged inside the testing plate 100, it is not necessary to individually insert and arrange the minute particles 31, 32, 33, and 34 according to their kinds, which makes it possible to simply perform the arrangement of the respective minute particles 31, 32, 33, and 34.

Moreover, in the testing plates 1 and 100, the respective minute particles 31, 32, 33, and 34 may be flowed from the hole 70c toward the hole 70d by using a pressurizing unit, such as a compressor, at the hole 70c. Alternatively, the respective minute particles 31, 32, 33, and 34 may be flowed from the hole 70c toward the hole 70d by using a decompressing unit, such as a compressor, at the hole 70d.

As such, when the respective minute particles 31, 32, 33, and 34 are flowed by using the pressurizing unit or the decompressing unit, the testing plate 1 may be positioned in any direction other than the vertical direction.

As described above, in the testing plate according to the present invention, the minute particles can be reliably and easily arranged at predetermined positions (order) in the testing plate. In addition, since the arrangement of the minute particles can be simply performed, the testing plate can be easily manufactured.

Further, the arrangement of the minute particles and the hybridization between the probes and the test sample can be performed in the same process, which makes it possible to rapidly perform the test.

## Claims

1. A testing plate comprising:
a base body having a concave portion therein;
a lid body; and
position regulating units that are provided in a space surrounded by the concave portion and the lid body to regulate the positions of minute particles,
wherein plural kinds of minute particles formed to have different particle diameters are stored in the space surrounded by the concave portion and the lid body, and
each position regulating unit has position regulating portions which are arranged at predetermined regulation intervals, and the regulation interval is set to pass particles having a diameter smaller than that of the minute particles.

2. The testing plate according to claim 1,
wherein plural types of position regulating units having different regulation intervals are formed in the space,
the plural types of position regulating units are arranged such that one of the plural types of position regulating units positioned closest to an anterior edge of the testing plate has the largest regulation interval and such that another of the plural types of position regulating units positioned closest to a posterior edge of the testing plate is the smallest regulation interval, so that the regulating intervals are gradually decreased from the anterior edge to the posterior edge, and
the positions of the minute particles are regulated by the position regulating units such the minute particles having the same diameter are positioned in the same region.

3. The testing plate according to claim 1,
wherein the position regulating portions are composed of a plurality of projections extending from a bottom surface of the concave portion toward a top surface of the base body, and the plurality of projections are formed at predetermined regulation intervals to constitute the position regulating units.

4. The testing plate according to claim 1,
wherein each of the position regulating portions is composed of a contact portion formed on the bottom surface of the concave portion to come into contact with the minute particle and a contact portion formed on the lower surface of the lid body to come into contact with the minute particle, and
both contact portions are formed at a regulation interval to constitute the position regulating unit.

5. A test method using a testing plate,
the testing plate including:
a base body having a concave portion therein;
a lid body; and
position regulating units that are provided in a space surrounded by the concave portion and the lid body to regulate the positions of minute particles,
wherein plural kinds of minute particles formed to have different particle diameters are stored in the space surrounded by the concave portion and the lid body, and
wherein each position regulating unit has position regulating portions which are arranged at predetermined regulation intervals, and the regulation interval is set to pass particles having a diameter smaller than that of the minute particles, and
the test method comprising:
mixing the minute particles with a test sample serving as a material to be tested;
supplying the minute particles and the test sample into the position regulating units to flow from the position regulating unit formed closest to an anterior edge of the testing plate to the position regulating unit formed closest to an posterior edge of the testing plate, so that the positions of the minute particles are regulated by the position regulating units; and
detecting a reaction state between the test sample and the minute particles whose positions are regulated by the respective position regulating units.
